# EUROPÄISCHE PATENTSCHRIFT

(11) **EP 4 316 745 B1**
(45) Veröffentlichungstag und Bekanntmachung des Hinweises auf die Patenterteilung: **03.09.2025**
(21) Anmeldenummer: 22203860.6
(22) Anmeldetag: 26.10.2022
(51) Int. Cl.: B25J 11/00, B25J 15/04, B25J 15/00, B25F 5/00, B25J 5/00

(54) **BAUROBOTER MIT ANPASSBARER WECHSELSCHNITTSTELLE**
CONSTRUCTION ROBOT WITH ADAPTABLE CHANGING INTERFACE
ROBOT DE CONSTRUCTION DOTÉ D'UNE INTERFACE INTERCHANGEABLE RÉGLABLE

(30) Priorität: 03.08.2022 EP 22188419
(43) Veröffentlichungstag der Anmeldung: 07.02.2024
(73) Patentinhaber: Hilti Aktiengesellschaft, 9494 Schaan (LI)
(72) Erfinder: Nitzschner, Michael, 86156 Augsburg (DE); Hurka, Florian, 86459 Margertshausen (DE); Hartmann, Markus, 87665 Mauerstetten (DE); Schmid, Tobias, 86875 Emmenhausen (DE); Fürfanger, Georg, 81373 München (DE); Brugger, Peter, 6800 Feldkirch (AT); Koscheck, David, 86899 Landsberg (DE); Britz, Rory, 82319 Starnberg (DE)
(74) Vertreter: Hilti Aktiengesellschaft Corporate Intellectual Property

(56) Entgegenhaltungen:
- WO-A1-2022/137017
- US-A1- 2018 290 311

## Beschreibung

Die Erfindung geht aus von einem Bauroboter, umfassend eine Wechselschnittstelle zur lösbaren Verbindung mit einem Werkzeug, wobei die Wechselschnittstelle wenigstens einen elektrischen Anschluss zur elektrischen Verbindung mit dem Werkzeug aufweist.

Über den elektrischen Anschluss kann das Werkzeug beispielsweise mit Energie durch den Bauroboter versorgt werden.

Bislang ist es jedoch nur möglich, einen Bauroboter nur mit spezifisch auf den Bauroboter angepassten oder spezifisch für den Bauroboter ausgewählten Werkzeugen nutzen zu können.

So beschreibt beispielsweise das Dokument US20180290311A1 einen Roboter, an dessen Roboterarm Endeffektoren austauschbar angeordnet werden können.

Die Offenlegung WO2022/137017A1 offenbart einen Industrieroboter, an dem wechselbar ein Werkzeug angeordnet werden kann.

Wünschenswert wäre eine breitere Auswahl an nutzbaren Werkzeugen.

Angesichts hoher Anschaffungskosten für einen Bauroboter im Vergleich zu den Werkzeugen wäre es besonders wünschenswert, den Bauroboter auch möglichst lange nutzen zu können und insbesondere eine breite Palette künftiger, möglicherweise sogar zum Zeitpunkt der Herstellung des Bauroboters noch nicht verfügbarer, Werkzeuge mit dem Bauroboter nutzen zu können.

Aufgabe der vorliegenden Erfindung ist es daher, einen Bauroboter bereitzustellen sowie ein Verfahren zur Nutzung bereitzustellen, die einen besonders flexiblen Einsatz des Bauroboters ermöglichen.

Gelöst wird die Aufgabe durch einen **Bauroboter** umfassend eine Wechselschnittstelle zur lösbaren Verbindung mit einem Werkzeug, wobei die Wechselschnittstelle wenigstens einen elektrischen Anschluss zur elektrischen Verbindung mit dem Werkzeug aufweist,
wobei der Bauroboter eingerichtet ist, wenigstens einen elektrischen Parameter des Anschlusses einzustellen, einer Energiequelle, wobei ein steuerbarer Energiewandler so eingerichtet ist, die durch die Energiequelle verfügbare elektrische Energie hinsichtlich ihrer Art, insbesondere Gleichspannung oder Wechselspannung, hinsichtlich ihrer Spannung, ihres Stromes und / oder eines Innenwiderstandes entsprechend dem elektrischen Parameter des Werkzeugs umzuwandeln.

Dem liegt der Gedanke zugrunde, dass sich unterschiedliche Werkzeuge hinsichtlich des elektrischen Parameters unterscheiden können.

Ist der elektrische Parameter fest an der Wechselschnittstelle eingestellt, können nur Werkzeuge mit dem Bauroboter genutzt werden, die einen entsprechenden elektrischen Parameter voraussetzen.

Dem erfindungsgemäßen Gedanken folgend kann nun jedoch eine besonders breite Palette von Werkzeugen, insbesondere auch noch von noch zu entwickelnden Werkzeugen und / oder von Werkzeugen unterschiedlicher Leistungsklassen, verwendet werden, wenn der elektrische Parameter des Anschlusses einstellbar und somit auf die Erfordernisse des jeweils anzuschließenden Werkzeugs anpassbar ist. Die Vielfalt der mit dem Bauroboter nutzbaren Werkzeuge lässt sich somit vergrößern. Der Bauroboter wird somit besonders flexibel verwendbar.

Darüber hinaus können durch geeignete Anpassung des Parameters des Anschlusses angeschlossene Werkzeuge verbessert genutzt werden, beispielsweise kann ein Funktionsumfang eines Werkzeugs weiter oder gar vollständig ausgenutzt werden. Auch können die Arbeitsleistung und / oder die Lebensdauer des Werkzeugs durch Einstellung eines optimierten Parameterwertes verbessert werden.

Für einen autonomen Betrieb des Bauroboters ist es günstig, wenn der für ein bestimmtes Werkzeug erforderliche Parameter ohne Interaktion eines Benutzers des Bauroboters bestimmt werden kann.

Insbesondere ist denkbar, dass der Bauroboter einen Detektor zur selbsttätigen Abfrage des Parameters von einem mit der Wechselschnittstelle verbundenen Werkzeug aufweist. Dazu kann das Werkzeug eingerichtet sein, als Antwort auf eine Abfrage durch den Detektor den Bauroboter den Parameter bereitzustellen.

Denkbar ist dabei, dass der Parameter durch ein am oder im Werkzeug befindlichen Marker bereitgestellt wird.

Beispielsweise kann der Marker eine drahtlose Funkschnittstelle umfassen. Diese kann beispielsweise ein NFC-Tag, ein "Bluetooth"-Tag und / oder ein RFID-Tag umfassen. In diesem Fall kann der Detektor ein zu der drahtlosen Funkschnittstelle des Markers passendes Lesegerät umfassen.

Es kann sich auch um einen optischen Marker handeln. Der optische Marker kann beispielsweise einen Barcode, einen QR-Code oder einen anderen Datenmatrix-Code umfassen. Vorzugsweise kann der optische Marker an einer Oberfläche des Werkzeugs angeordnet sein. Denkbar ist auch, dass der Marker einen Schriftzug und / oder eine Zahlenfolge als Klartext aufweist.

Im Falle eines optischen Markers kann der Detektor ein optisches Lesegerät, beispielsweise eine Bildaufnahmeeinheit wie beispielsweise eine Farbbildkamera umfassen.

Der Marker kann auch einen elektrischen Marker umfassen. Beispielsweise kann das Werkzeug einen elektrischen Marker aufweisen, der eine elektrisch abfragbare Codierung über eine elektrische Schnittstelle bereitstellt. In diesem Fall kann der Detektor ein Lesegerät zum Auslesen der elektrischen Schnittstelle umfassen.

Die elektrisch abfragbare Kodierung kann beispielsweise durch ein oder mehrere Schalter, allgemein auch als "Jumper" bezeichnet, ausgebildet sein.

Alternativ oder ergänzend kann das Werkzeug auch wenigstens eine elektronische Schaltung aufweisen, beispielsweise einen programmierbaren Microcontroller umfassend. Die elektrisch abfragbare Kodierung kann somit software-basiert bereitgestellt werden.

Denkbar ist auch, dass das Werkzeug einen Marker aufweist, durch den lediglich ein Identifikationscode anstelle des eigentlichen Parameters bereitgestellt wird.

Der Detektor kann dann ein Lesegerät umfassen, das eingerichtet ist, den Identifikationscode des Werkzeugs auszulesen.

Dann kann der Bauroboter, insbesondere eine Steuerung des Bauroboters, eingerichtet sein, eine Verbindung zu einer Werkzeugdatenbank herzustellen und mit Hilfe des Identifikationscodes einen in der Werkzeugdatenbank hinterlegten Parameter abzufragen.

Die Werkzeugdatenbank kann sich auch auf einem entfernten Rechnersystem, beispielsweise auf einem Cloud-basierten Rechnersystem, befinden.

In der Werkzeugdatenbank können auch weitere Informationen abgelegt sein. Beispielsweise kann die Werkzeugdatenbank abrufbar abgelegten, auf der Steuerung des Bauroboters ausführbaren Programmcode enthalten, der bei Ausführung auf der Steuerung des Bauroboters für das jeweilige Werkzeug spezifische Funktionalitäten und / oder sonstige spezifische Eigenschaften des Werkzeugs durch den Bauroboter nutzbar macht.

Allgemein kann somit der Parameter direkt am oder im Werkzeug abrufbar abgelegt sein. Alternativ oder ergänzend kann der Parameter indirekt, mit Hilfe des Identifikationscodes des Werkzeugs, bestimmbar sein.

Der Parameter kann eine Art der Energieversorgung und / oder eine Art einer Kommunikation betreffen.

Beispielsweise kann es sich bei dem Parameter um eine Versorgungsspannung, insbesondere des Werkzeugs, handeln, beispielsweise eine Spannungs- und / oder Leistungsklasse des Werkzeugs.

So kann der Parameter beispielsweise indizieren, welche Spannung, welcher maximale Strom und / oder welche maximale Leistung an einem Energieversorgungsanschluss der Wechselschnittstelle zur Nutzung des Werkzeugs bereitzustellen ist. Beispielsweise kann der Parameter indizieren, dass das Werkzeug beispielsweise mit einer Versorgungsspannung von mindestens 12 V und beispielsweise weniger als 100 V, beispielsweise nominal 12 V, 18 V, 22 V, 36 V, 44 V, 54 V, 60 V oder 72V betreibbar ist und somit am elektrischen Anschluss eine entsprechende Versorgungsspannung durch den Bauroboter bereitzustellen ist.

Der Bauroboter weist einen steuerbaren Energiewandler auf.

Der Energiewandler kann einen DC/DC-, einen AC/DC, einen DC/AC und / oder einen AC/AC-Wandler umfassen. Der Energiewandler kann eingerichtet sein, eine an Bord des Bauroboters verfügbare elektrische Energie hinsichtlich der ihrer Art, insbesondere Gleichspannung oder Wechselspannung, hinsichtlich ihrer Spannung, ihres Stromes und / oder eines Innenwiderstandes umzuwandeln. Die umgewandelte elektrische Energie kann am Anschluss der Wechselschnittstelle präsentierbar sein.

Denkbar ist auch, dass der Parameter eine Art der Kommunikation, beispielsweise einen bestimmten Kommunikationsstandard, z. B. wie allgemein mit "CANOpen" bezeichnet, indiziert.

Denkbar ist auch, dass der Parameter eine Verfügbarkeit und / oder eine Art einer Funktionalität des Werkzeugs betrifft, beispielsweise die Verfügbarkeit einer Schlagfunktionalität. Der Parameter kann alternativ oder ergänzend auch indizieren, ob oder welche Sensorik am Werkzeug verfügbar ist. Ebenfalls ist denkbar, dass der Parameter eine Angabe zu einer Version und / oder zu einer Kompatibilität mit anderen Werkzeugen betrifft.

Der Parameter kann alternativ oder ergänzend eine Angabe eines Typs und / oder eine sonstigen Eigenschaft des Werkzeugs indizieren. Beispiele sind Angaben zum Hersteller des Werkzeugs, zur Art des Werkzeugs, beispielsweise Meißelmaschine, Bohrmaschine, Schlagschraubmaschine, Schleifmaschine, Trennmaschine oder dergleichen.

Denkbar ist auch, dass der Parameter einen Betriebsparameter des Werkzeugs indiziert, beispielsweise ein Gewicht, ein Vibrationswert, Grenzwerte bezüglich Stromstärken, elektrischen Kapazitäten, Temperaturgrenzen, zulässige Betriebsdauern, Statusinformationen oder dergleichen. Dies ermöglicht beispielsweise eine besonders präzise Steuerung eines Manipulators des Bauroboters, wenn sich am Manipulator die Wechselschnittstelle mitsamt dem an dieser angeordneten Werkzeug befindet.

Der Anschluss kann mit einer Batterieschnittstelle des Werkzeugs elektrisch koppelbar sein. Beispielsweise kann das Werkzeug ein Akkumulator-betriebenes Werkzeug sein. Zur Nutzung mit dem Bauroboter kann ein Akkumulator des Werkzeugs von der Batterieschnittstelle demontiert werden. Der Anschluss kann dann mit der Batterieschnittstelle elektrisch gekoppelt werden. Der Bauroboter kann somit über den Anschluss und die Batterieschnittstelle das Werkzeug mit elektrischer Energie versorgen.

Denkbar ist auch, dass der Anschluss eingerichtet ist, über die Batterieschnittstelle Daten mit dem Werkzeug uni- oder bidirektional auszutauschen.

Günstig ist daher, und kann als eigenständige Erfindung angesehen werden, ein Bauroboter zur Ausführung von Bauarbeiten auf einer Hochbau- und / oder einer Tiefbau-Baustelle, umfassend eine mobile Plattform, einen Manipulator, einer am Manipulator, insbesondere an einem Endeffektor des Manipulators, angeordneten Wechselschnittstelle und einem an der Wechselschnittstelle angeordneten Werkzeug, wobei die Wechselschnittstelle einen elektrischen Anschluss aufweist, der mit einer Batterieschnittstelle des Werkzeugs elektrisch gekoppelt ist und / oder koppelbar ist. Dabei können die mobile Plattform, der Manipulator, die Wechselschnittstelle und / oder das Werkzeug ein oder mehrere der jeweils vorangehend und / oder nachfolgenden, jeweils äquivalenten Elemente aufweisen.

Unter "Werkzeug" kann ein nicht zu dem Körper des Bauroboter gehörendes Objekt verstanden werden, mit dessen Hilfe die Funktionen des Bauroboter erweitert werden, um auf diese Weise eine Bauaufgabe, beispielsweise eine Bohraufgabe, eine Trennaufgabe, eine Schleifaufgabe oder dergleichen, ausführen zu können. So kann auch unter einem Werkzeug eine elektrische Werkzeugmaschinen wie beispielsweise Maschinen zum Bohren, beispielsweise Bohrhämmer, zum Trennen, beispielsweise Sägen oder Winkelschleifer, zum Schleifen zum Markieren, zum Messen oder dergleichen verstanden werden. Insbesondere können Werkzeuge zur Bearbeitung von Gestein, beispielsweise Beton, und zur Bearbeitung von Metallen, beispielsweise von Stahl, umfasst sein.

Der Bauroboter kann einen Manipulator aufweisen. Der Manipulator kann einen mehrachsigen Arm, beispielsweise mit wenigstens drei, vorzugsweise wenigstens sechs Freiheitsgraden, aufweisen. Zur Vergrößerung der Reichweite kann der Bauroboter eine Hubvorrichtung aufweisen.

An einem Endeffektor des Manipulators kann sich die Wechselschnittstelle befinden. Der Bauroboter kann zur Ausführung von Bauarbeiten auf einer Hochbau-Baustelle, einer Tiefbau-Baustelle und / oder einer Stahlbau-Baustelle, beispielsweise einer Ölbohrplattform, ausgebildet sein.

Er kann zur Ausführung von Bauarbeiten an einer Decke, einer Wand und / oder einem Boden eingerichtet sein. Er kann zum Markieren, Bohren, Trennen, Meißeln, Schleifen und / oder Setzen eines Bauelements ausgebildet sein.

Der Bauroboter kann auch eine mobile Plattform aufweisen. Die mobile Plattform kann ein Räderfahrwerk und / oder ein Kettenfahrwerk umfassen. Die mobile Plattform kann wenigstens zwei Freiheitsgrade aufweisen. Es kann sich auch um eine Flugplattform handeln. Der Bauroboter kann insgesamt wenigstens zehn Freiheitsgrade aufweisen.

Der Bauroboter kann eine Steuerung aufweisen. Die Steuerung kann als Computer ausgebildet sein. Sie kann einen Prozessor, einen Speicherbaustein und / oder einen auf dem Prozessor ausführbaren Programmcode aufweisen. Der Prozessor kann ein oder mehrere Unterprozessoren aufweisen. Der Programmcode kann eingerichtet sein, bei Ausführung auf der Steuerung ein an der Wechselschnittstelle angeordnetes Werkzeug zu betreiben.

Bei einem Verfahren zur Nutzung eines elektrischen Werkzeugs mit einem Bauroboter wird zunächst wenigstens ein Parameter des zu nutzenden Werkzeugs vom Bauroboter selbsttätig ermittelt und dann betreibt der Bauroboter das Werkzeug entsprechend dem ermittelten Parameter.

Zur Ermittlung des Parameters kann ein, Detektor des Bauroboters verwendet werden.

Besonders bevorzugt kann die Ermittlung erfolgen, indem der Bauroboter den Parameter vom Werkzeug abfragt. Die Abfrage kann elektrisch über die Wechselschnittstelle und eine Batterieschnittstelle des Werkzeugs erfolgen. Alternativ oder ergänzend kann die Abfrage drahtlos, insbesondere Funk-basiert und / oder optisch, erfolgen. Die Abfrage des Parameters kann direkt oder indirekt, insbesondere durch Abfrage eines Identifikationscodes und einer nachfolgenden Abfrage einer Werkzeugdatenbank, erfolgen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- Fig. 1: eine perspektivische Darstellung eines Bauroboters mit einer Wechselschnittstelle und einem daran angeordneten Werkzeug;
- Fig. 2: ein Blockschaltbild des Bauroboters und des Werkzeugs und
- Fig. 3: ein Flussdiagramm eines Verfahrens.

In der nachfolgenden Beschreibung der Figuren werden zur Erleichterung des Verständnisses der Erfindung für gleiche oder sich funktional entsprechende Elemente jeweils die gleichen Bezugszeichen verwendet.

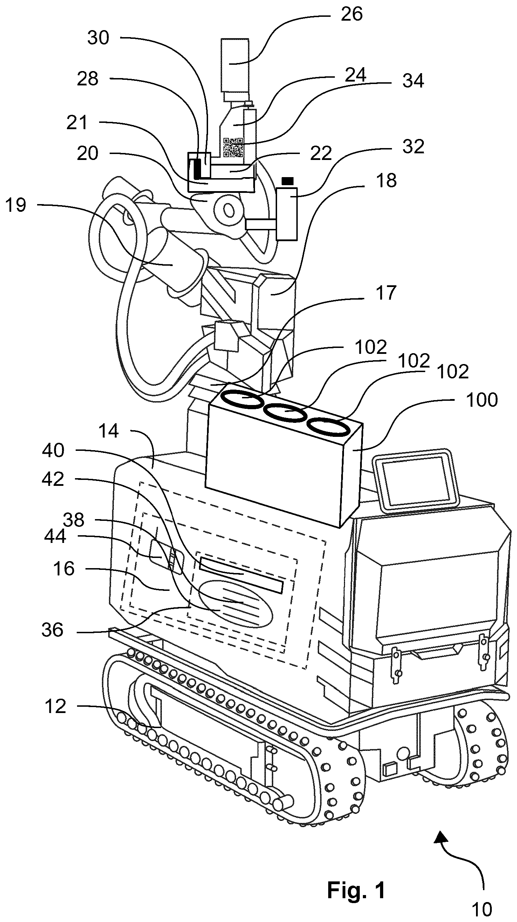

**Fig. 1** zeigt einen Bauroboter **10** mit einem als Kettenfahrwerk ausgebildeten Fahrwerk **12,** einem in einem Gehäuse **14** ausgebildeten Steuerraum **16** und einem oberseitig des Gehäuses 14 angeordneten Manipulator **18.** Der Manipulator umfasst eine Hubvorrichtung **17** zur vertikalen Verlagerung und einen multiaxial steuerbaren Arm **19.**

Am freien Ende des Arms 19 befindet sich ein Endeffektor **20** mit einer Wechselschnittstelle **21.**

An der Wechselschnittstelle 21 ist ein Werkzeug **24,** insbesondere eine Gesteinsbohrwerkzeugmaschine mit einer Staubabsaugungsvorrichtung 26, lösbar angeordnet.

Um das Werkzeug 24 an der Wechselschnittstelle 21 lösbar anzuordnen, weist es einen Verbindungsabschnitt **22** auf.

Die Wechselschnittstelle 21 ist zur lösbaren Verbindung des Verbindungsabschnitts 22 und damit auch des Werkzeugs 24 ausgebildet. Die Wechselschnittstelle 21 weist einen elektrischen Anschluss **28** auf, der mit einer Batterieschnittstelle **30** des Werkzeugs 24 koppelbar ist. Über den Anschluss 28 ist somit der Bauroboter 10 mit dem Werkzeug 24 elektrisch gekoppelt. Insbesondere können sowohl elektrische Antriebsenergie zum Werkzeug 24 als auch Daten bidirektional vom Bauroboter 10 zum Werkzeug 24 und umgekehrt übertragen werden.

Ferner weist der Bauroboter 10 ein Vorratsmagazin **100** auf. Das Vorratsmagazin 100 weist mehrere Ablageplätze **102** auf. An freien Ablageplätzen 102 kann das Werkzeug 24 zur Aufbewahrung und gegebenenfalls späteren Wiederverwendung abgelegt werden. Auch können weitere Elemente, beispielsweise weitere Werkzeuge, in den Ablageplätzen 102 zur späteren Verwendung aufbewahrt werden.

Am Endeffektor 20 befindet sich ein Detektor **32,** der eine Kamera, beispielsweise eine Farbbildkamera, eine Schwarzweißkamera und / oder eine 3D-Kamera, umfasst.

Das Werkzeug 24 weist einen Identifikationscode **34** auf. Beispielhaft kann der Identifikationscode 34 einen Datenmatrixcode, beispielsweise einen Barcode, einen QR-Code oder einen Aruco-Code, umfassen.

Aus Darstellungsgründen ist der Identifikationscode 34 auf einer Seitenfläche des Werkzeugs 24 in Fig. 1 abgebildet. Vorzugsweise befindet sich der Identifikationscode 34 jedoch an einer Position, von der aus er selbst dann sichtbar ist, wenn das Werkzeug 24 sich an einem der Ablageplätze 102 befindet. Beispielsweise kann der Identifikationscode 34 an einer Stirnseite des Verbindungsabschnitt 22 und /oder an einer Oberseite und / oder an einer Unterseite des Werkzeugs 24 angeordnet sein.

Der Bauroboter 10 weist, vorzugsweise innerhalb des Gehäuses 14, eine im Steuerraum 16 angeordnete Steuerung **36** auf. Die Steuerung 36 umfasst einen Speicherbaustein **38** und einen Mikroprozessor **40.**

Die Steuerung 36 ist mit ausführbarem Programmcode **42** ausgestattet. Der Programmcode 42 ist abrufbar und auf dem Mikroprozessor 40 ausführbar in dem Speicherbaustein 38 gespeichert.

Die Steuerung 36 ist, insbesondere mittels des Programmcodes 42, eingerichtet, mit Hilfe des Manipulators 18 den Detektor 32 so zu bewegen, dass ein Identifikationscode eines vom Bauroboter 10 zu verwendenden Werkzeugs, beispielsweise wenn es in einem der Ablageplätze 102 aufgenommen ist, in ein Sichtfeld des Detektors 32 gerät und vom Detektor 32 eine Aufnahme des Identifikationscodes 34 aufgenommen wird.

Weiter ist die Steuerung 36, insbesondere ebenfalls mittels des Programmcodes 42, eingerichtet, den vom Detektor 32 aufgenommenen Identifikationscode, beispielsweise den Identifikationscode 34 des Werkzeugs 24, zu erkennen. Ferner ist die Steuerung 36 eingerichtet, über eine Kommunikationsschnittstelle **44** eine in einem Cloud-basierten Rechnersystem gespeicherte Werkzeugdatenbank (in Fig. 1 nicht dargestellt) zu kontaktieren und wenigstens einen zu dem erkannten Identifikationscode zugehörigen Parameter eines Werkzeugs abzufragen.

Somit ist der Bauroboter 10 insgesamt eingerichtet, den Parameter des Werkzeugs selbsttätig, insbesondere ohne Interaktion eines Benutzers des Bauroboters 10, abzufragen.

Der Bauroboter 10 ist zur Ausführung von Bauaufgaben, beispielsweise von Bohrarbeiten in Decken und Wänden, auf einer Baustelle, insbesondere auf einer Hochbau-Baustelle, einer Tiefbau-Baustelle und / oder auf einer Stahlbau-Baustelle wie beispielsweise einer Ölplattform, ausgebildet. Insbesondere kann die Steuerung 36 den Manipulator 18 derart steuern, dass Bauarbeiten an Decken und Wänden ausführbar sind. Für die weitere Darstellung des Ausführungsbeispiels wird beispielhaft angenommen, dass die auszuführende Bauaufgabe im Bohren eines Bohrlochs in eine Betondecke mit dem als Gesteinsbohrwerkzeugmaschine ausgebildeten Werkzeug 24 besteht.

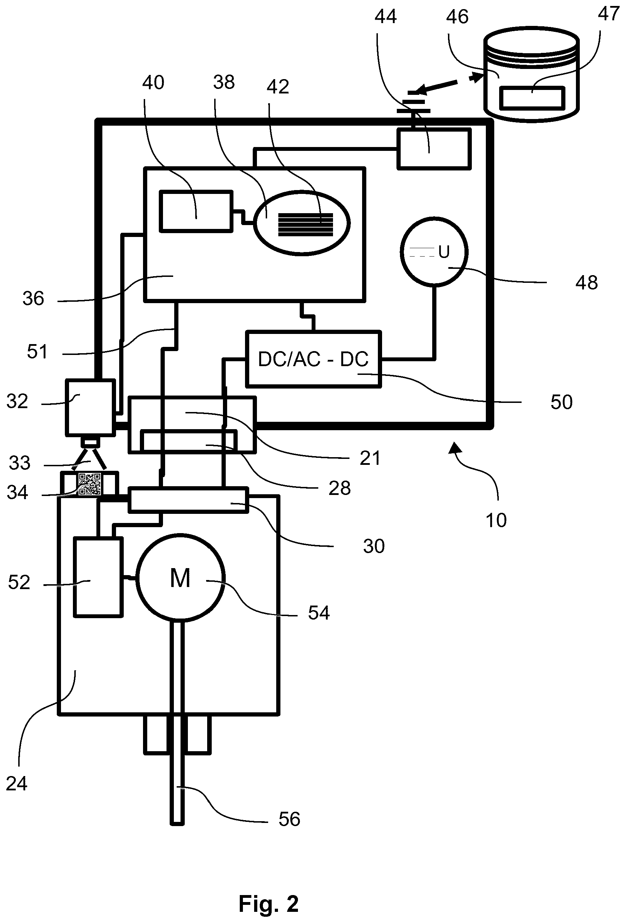

**Fig. 2** zeigt ein Blockschaltbild des Bauroboters 10 mit dem an diesem montierten Werkzeug 24.

Zur Aufnahme des Identifikationscodes 34 kann dieser in den Bereich eines Sichtfelds 33 des Detektors 32, beispielsweise durch Verlagerung des Detektors 32, gebracht werden. Der Detektor 32 kann dann eine Aufnahme des Identifikationscodes 34 aufnehmen und zugehörige Bilddaten an die Steuerung 36 senden. Dies kann bereits erfolgen, bevor das Werkzeug 24 über die Werkzeugschnittstelle 21 mit dem Bauroboter 10 verbunden ist.

Die Steuerung 36 mit ihrem Mikroprozessor 40, dem Speicherbaustein 38 und dem darin abgespeicherten Programmcode 42 kann die Bilddaten vom Detektor 32 empfangen und insbesondere den Identifikationscode 34 identifizieren. Über das Kommunikationsmodul 44 kann sie von der Werkzeugdatenbank **46** wenigstens einen Parameter **47** des Werkzeugs 24 anhand des identifizierten Identifikationscodes 34 abfragen.

Im hier dargestellten Ausführungsbeispiel entspricht der identifizierte Identifikationscode 34 einer Art des Werkzeugs 24, also der Gesteinsbohrwerkzeugmaschine. Der wenigstens eine Parameter 47 entspreche einer Soll-Betriebsspannung des Werkzeugs 24, beispielsweise 21,6 V.

Der Bauroboter 10 weist zur allgemeinen Energieversorgung eine Bordspannung von beispielsweise 48 V auf. Diese wird durch eine Energiequelle **48,** im Ausführungsbeispiel ein Lithium-basierter Akkumulator und somit eine Gleichspannungsquelle, in Form einer entsprechenden Gleichspannung bzw. eines entsprechenden Gleichstroms bereitgestellt.

Ein Energiewandler **50** des Bauroboters 10 ist eingerichtet, aus dem durch die Energiequelle 48 bereitgestellten Gleichstrom elektrische Energie für das Werkzeug 24 in einer auf das Werkzeug 24 angepassten Form zu wandeln. Die zu erzeugende Form kann durch die Steuerung 36 eingestellt werden. Insbesondere ist der Energiewandler 50 eingerichtet, aus dem bereitgestellten Gleichstrom wahlweise Gleichstrom oder Wechselstrom zu erzeugen. Ferner ist er eingerichtet, die erzeugte Gleichspannung beziehungsweise Wechselspannung auf einen durch die Steuerung 36 bestimmten Wert einzustellen. Dabei bestimmt die Steuerung 36 den Wert anhand des ermittelten Parameters 47.

Entsprechend dem Wert des ermittelten Parameters 47, im Beispiel also 21,6 V, stellt die Steuerung 36 im dargestellten Ausführungsbeispiel die von dem Energiewandler 50 erzeugte Ausgangsspannung auf 21,6 V Gleichspannung, im Allgemeinen also auf den durch den Parameter 47 vorgegebenen Wert und die durch diesen vorgegebene Art, ein.

Sobald das Werkzeug 24 über die Wechselschnittstelle 21 mit dem Bauroboter 10, insbesondere über den elektrischen Anschluss 28 der Wechselschnittstelle 21 und die Batterieschnittstelle 30, elektrisch gekoppelt ist, steht somit elektrische Betriebsenergie in einer auf das Werkzeug 24 abgestimmten Art zum Betrieb des Werkzeugs 24 bereit.

In Fig. 2 ist ferner zu erkennen, dass eine, insbesondere bidirektionale, Datenverbindung **51** über den Anschluss 28 und die Batterieschnittstelle 30 zu einer Werkzeugsteuerung **52** des Werkzeugs 24 besteht. Über die Datenverbindung 51 können Funktionalitäten des Werkzeugs 24 durch die Steuerung 36 gesteuert werden. Beispielsweise kann ein Steuersignal zum Starten oder Stoppen eines Antriebsmotors 54 des Werkzeugs 24 übermittelt werden. Die Werkzeugsteuerung 52 kann über die Datenverbindung 51 Statusdaten, beispielsweise ein eine Störung des Betriebs indizierendes Signal, an die Steuerung 36 übermitteln.

Sobald der Antriebsmotor 54 durch das Steuersignal gestartet ist, treibt dieser einen Bohrer **56** beispielsweise rotierend und schlagend an, um dadurch eine gewünschte Bauaufgabe, in diesem Fall ein Bohren eines Bohrlochs mit dem Werkzeug 24, auszuführen.

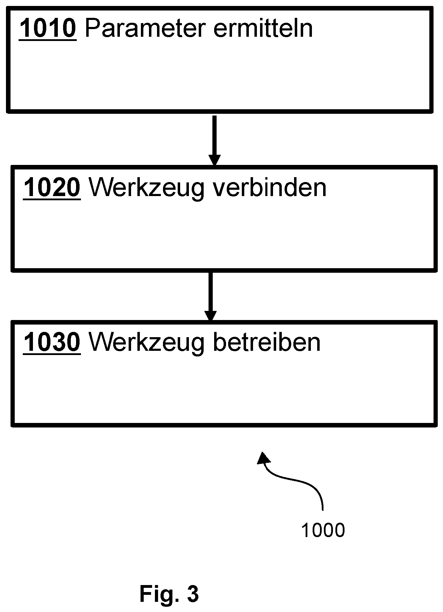

**Fig. 3** zeigt ein Verfahren **1000.** Das Verfahren 1000 wird zur Erleichterung des Verständnisses unter Bezugnahme auf die in Verbindung mit Fig. 1 und Fig. 2 eingeführten Elemente und Bezugszeichen näher erläutert.

Das Verfahren 1000 stellt eine Methode zur Verfügung, ein elektrisches Werkzeug, mit einem Bauroboter zu nutzen. Insbesondere sind unterschiedliche Arten von Werkzeugen durch das Verfahren 1000 nutzbar. Für die nachfolgenden Darstellungen wird beispielhaft angenommen, dass der Bauroboter 10 das Werkzeug 24 nutzen soll.

Dazu wird im Rahmen einer Ermittlungsoperation **1010** wenigstens ein Parameter 47 des Werkzeugs 24 ermittelt.

Die Ermittlung kann wie im Zusammenhang mit Fig. 2 beschrieben erfolgen, bevor das Werkzeug 24 vollständig mit dem Bauroboter 10 verbunden ist. Insbesondere kann der Parameter direkt vom Werkzeug 24 über eine optische Kommunikation, beispielsweise wie vorangehend beschrieben mithilfe eines eine Kamera aufweisenden Detektors 32, der einen optisch wahrnehmbares Datenbild, beispielsweise einen Barcode oder einen QR-Code, aufnimmt. Das optisch wahrnehmbare Datenbild kann einen Identifikationscode 34 umfassen, über den die Werkzeugdatenbank 46 abfragbar ist, und / oder das optisch wahrnehmbare Datenbild kann den wenigstens einen Parameter unmittelbar beinhalten.

Alternativ kann die Ermittlungsoperation 1010 zu einem solchen frühen Zeitpunkt auch durch Funk-basierte Kommunikation zwischen dem Bauroboter 10 und dem Werkzeug 24 erfolgen.

Denkbar ist auch, die Ermittlungsoperation 1010 erst nach Verbindung des Werkzeugs 24 mit dem Bauroboter 10, insbesondere mit der Wechselschnittstelle 21, durchzuführen. Denkbar ist, auf Basis eines standardisierten Protokolls, beispielsweise auf allen Ebenen einer OSI *(Open Systems Interconnection model)* Schichtenarchitektur eines standardisierten Netzwerkprotokolls, den Parameter vom Werkzeug 24 abzufragen. Steht wenigstens eine separate Datenverbindung zur Verfügung, wie beispielsweise im Zusammenhang mit Fig. 2 in Verbindung mit der Datenverbindung 51 beschrieben, so ist auch denkbar, ein solches standardisiertes Protokoll lediglich für die Datenverbindung, nicht aber für alle anderen elektrischen Verbindungen vorauszusetzen. Diese anderen elektrischen Verbindungen können somit weiterhin auf die jeweiligen Erfordernisse des zu betreibenden Werkzeugs anhand des wenigstens einen Parameters angepasst werden.

Je nach Art des ermittelten, wenigstens einen Parameters 47 kann auch eine Überprüfung erfolgen, ob das Werkzeug 24 zur Ausführung der gewünschten Bauaufgabe überhaupt geeignet ist. Gegebenenfalls kann anderenfalls ein alternatives Werkzeug, beispielsweise aus dem Vorratsmagazin 100, ausgewählt werden. Die Überprüfung ist insbesondere dann denkbar, wenn der Parameter 47 eine Art und / oder eine Funktionalität des Werkzeugs 24 umfasst.

Im vorliegend beschriebenen Fall könnte beispielsweise je nach Art des Parameters 47 überprüft werden, ob das Werkzeug 24 grundsätzlich eine Bohrmaschine ist, ob sie eine Schlagbohrfunktionalität aufweist, die ein Bohren von Beton erlaubt, ob das Werkzeug 24 elektrische Anschlusswerte voraussetzt, die grundsätzlich vom Bauroboter 10 bereitgestellt werden können.

Denkbar ist auch, insbesondere, wenn eine Art des Werkzeugs ermittelt wird, einen der Art des Werkzeugs entsprechenden Programmcode, beispielsweise durch Abfrage der Werkzeugdatenbank 46 und Herunterladen des Programmcodes von dieser, bereit zu stellen. Der Programmcode kann spezifisch zum Betrieb des jeweiligen Werkzeugs angepasst sein. So können sogar nach Herstellung des Bauroboters 10 zusätzliche Werkzeugarten durch den Bauroboter 10 nutzbar gemacht werden.

Durch eine Verbindungsoperation **1020** wird das Werkzeug 24 mit der Wechselschnittstelle 21 des Bauroboters 10 verbunden. Ist das Werkzeug 24 in einem der Ablageplätze 102 aufgenommen, kann der Manipulator 18 derart gesteuert werden, dass die Werkzeugschnittstelle 21 zum Verbindungsabschnitt 22 geführt und bei Kontakt der Verbindungsabschnitt 22 an der Werkzeugschnittstelle 21 zur sicheren mechanischen Befestigung des Verbindungsabschnitts 22 verrastet wird. Alternativ oder ergänzend kann auch eine Verrastung mittels der Batterieschnittstelle 30 erfolgen.

Weisen der Anschluss 28 und die Batterieschnittstelle 30 des Verbindungsabschnitts 22 geeignete Steckverbindungen und Steckbuchsen auf, können dabei auch die vorgesehenen elektrischen Verbindungen hergestellt werden.

Anschließend wird in einer Ausführungsoperation **1030** das Werkzeug 24, insbesondere entsprechend dem ermittelten Parameter 47, betrieben, um die gewünschte Bauaufgabe auszuführen, in diesem Fall also, um das gewünschte Bohrloch zu bohren.

### Bezugszeichenliste

- 10: Bauroboter
- 12: Fahrwerk
- 14: Gehäuse
- 16: Steuerraum
- 17: Hubvorrichtung
- 18: Manipulator
- 19: Arm
- 20: Endeffektor
- 21: Wechselschnittstelle
- 22: Verbindungsabschnitt
- 24: Werkzeug
- 26: Staubabsaugungsvorrichtung
- 28: Anschluss
- 30: Batterieschnittstelle
- 32: Detektor
- 33: Sichtfeld
- 34: Identifikationscode
- 36: Steuerung
- 38: Speicherbaustein
- 40: Mikroprozessor
- 42: Programmcode
- 44: Kommunikationsschnittstelle
- 46: Werkzeugdatenbank
- 47: Parameter
- 48: Energiequelle
- 50: Energiewandler
- 51: Datenverbindung
- 52: Werkzeugsteuerung
- 56: Bohrer
- 100: Vorratsmagazin
- 102: Ablageplatz
- 1000: Verfahren
- 1010: Ermittlungsoperation
- 1020: Verbindungsoperation
- 1030: Ausführungsoperation

## Patentansprüche

1. **Bauroboter (10),** insbesondere zur Ausführung von Bauarbeiten im Hochbau, Tiefbau und / oder Stahlbau, umfassend eine Wechselschnittstelle (21) zur lösbaren Verbindung mit einem Werkzeug (24),
wobei die Wechselschnittstelle (21) wenigstens einen elektrischen Anschluss (28) zur elektrischen Verbindung mit dem Werkzeug (24) aufweist,
wobei der Bauroboter (10) eingerichtet ist, wenigstens einen elektrischen Parameter (47) des Anschlusses (28) einzustellen,
einer Energiequelle (48),
**gekennzeichnet durch** einen steuerbaren Energiewandler (50), der eingerichtet ist, die durch die Energiequelle (48) verfügbare elektrische Energie hinsichtlich ihrer Art, insbesondere Gleichspannung oder Wechselspannung, hinsichtlich ihrer Spannung, ihres Stromes und / oder eines Innenwiderstandes entsprechend dem elektrischen Parameter (47) des Werkzeugs umzuwandeln.

2. Bauroboter nach dem vorhergehenden Anspruch, **dadurch gekennzeichnet, dass** der Bauroboter (10) einen Detektor (32) zur selbsttätigen Abfrage des Parameters (47) von einem mit der Wechselschnittstelle (21) verbundenen Werkzeug (24) aufweist.

3. Bauroboter nach einem der vorhergehenden Ansprüche, **dadurch gekennzeichnet, dass** der Parameter (47) eine Art der Energieversorgung und / oder eine Art einer Kommunikation betrifft, beispielsweise eine Versorgungsspannung.

4. Bauroboter nach einem der vorhergehenden Ansprüche, **dadurch gekennzeichnet, dass** der Parameter (47) eine Verfügbarkeit und / oder eine Art einer Funktionalität des Werkzeugs betrifft, beispielsweise die Verfügbarkeit einer Schlagfunktionalität.

5. Bauroboter nach einem der vorhergehenden Ansprüche, **dadurch gekennzeichnet, dass** der Anschluss (28) mit einer Batterieschnittstelle (30) des Werkzeugs (24) elektrisch koppelbar ist.

## Claims

1. Construction robot (10), in particular for carrying out construction work in building construction, civil engineering and/or steel construction, comprising a changeover interface (21) for detachable connection to a tool (24),
wherein the changeover interface (21) has at least one electrical connector (28) for electrically connecting to the tool (24),
wherein the construction robot (10) is configured to set at least one electrical parameter (47) of the connector (28),
a power source (48),
**characterized by** a controllable power converter (50) configured to convert the electrical power available by way of the power source (48) with regard to its type, in particular DC voltage or AC voltage, with regard to its voltage, its current and/or an internal resistance according to the electrical parameter (47) of the tool.

2. Construction robot according to the preceding claim, **characterized in that** the construction robot (10) comprises a detector (32) for automatically querying the parameter (47) from a tool (24) connected to the changeover interface (21).

3. Construction robot according to either one of the preceding claims, **characterized in that** the parameter (47) relates to a type of power supply and/or a type of communication, for example a supply voltage.

4. Construction robot according to any one of the preceding claims, **characterized in that** the parameter (47) relates to an availability and/or a type of functionality of the tool, for example the availability of an impact functionality.

5. Construction robot according to any one of the preceding claims, **characterized in that** the connector (28) can be electrically coupled to a battery interface (30) of the tool (24).

## Revendications

1. Robot de construction (10), en particulier pour l'exécution de travaux de construction dans le bâtiment, le génie civil et/ou la construction métallique, comprenant une interface interchangeable (21) pour une liaison amovible à un outil (24),
l'interface interchangeable (21) comportant au moins une connexion électrique (28) pour la liaison électrique à l'outil (24),
le robot de construction (10) étant conçu pour régler au moins un paramètre électrique (47) de la connexion (28),
une source d'énergie (48),
**caractérisé par** un convertisseur d'énergie (50) pouvant être commandé, lequel est conçu pour convertir l'énergie électrique disponible par l'intermédiaire de la source d'énergie (48) en ce qui concerne son type, en particulier à tension continue ou à tension alternative, en ce qui concerne sa tension, son courant et/ou une résistance interne conformément au paramètre électrique (47) de l'outil.

2. Robot de construction selon la revendication précédente, **caractérisé en ce que** le robot de construction (10) comporte un détecteur (32) pour demander automatiquement le paramètre (47) à un outil (24) relié à l'interface interchangeable (21).

3. Robot de construction selon l'une quelconque des revendications précédentes, **caractérisé en ce que** le paramètre (47) concerne un type d'alimentation en énergie et/ou un type de communication, par exemple une tension d'alimentation.

4. Robot de construction selon l'une quelconque des revendications précédentes, **caractérisé en ce que** le paramètre (47) concerne une disponibilité et/ou un type de fonctionnalité de l'outil, par exemple la disponibilité d'une fonctionnalité de percussion.

5. Robot de construction selon l'une quelconque des revendications précédentes, **caractérisé en ce que** la connexion (28) peut être couplée électriquement à une interface de batterie (30) de l'outil (24).
